(19) Europäisches Patentamt
European Patent Office
Office européen des brevets

(11) Numéro de publication: **0 066 479**
**B1**

# (12) FASCICULE DE BREVET EUROPEEN

(45) Date de publication du fascicule du brevet: **10.10.84**

(51) Int. Cl.³: **C 03 C 17/245**, H 01 K 3/00

(21) Numéro de dépôt: **82400778.5**

(22) Date de dépôt: **29.04.82**

(54) **Procédé d'opalisation de lampes par voie gazeuse.**

(30) Priorité: **20.05.81 FR 8110059**

(43) Date de publication de la demande: **08.12.82 Bulletin 82/49**

(45) Mention de la délivrance du brevet: **10.10.84 Bulletin 84/41**

(84) Etats contractants désignés: **AT BE CH DE FR GB IT LI LU NL SE**

(56) Documents cités:
**EP - A - 0 047 688**
**DE - A - 2 906 038**
**FR - A - 2 304 169**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Barbier, Jean-Paul, 3, Impasse Le Lorrain, F-78330 Fontenay-le-Fleury (FR)**
Inventeur: **Lerouyer, Gilbert, Chemin des Ruelles, F-78910 Orgerus (FR)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

**EP 0 066 479 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé d'opalisation de lampes par voie gazeuse.

L'opalisation consiste en la réalisation d'un dépôt de produit blanc diffusant la lumière comme le dioxyde de titane, la silice ou l'alumine; le revêtement ayant une adhérence suffisante et une épaisseur convenable.

On a proposé diverses méthodes d'opalisation des lampes, et au niveau industriel deux procédés sont mis en œuvre.

Selon le procédé dit »à voie humide«, on dépose à l'intérieur de la lampe une suspension de dioxyde de titane dans un liquide que l'on évapore en portant l'ampoule à une température de 400 à 500° C.

Suivant le procédé dit »à voie sèche«, on applique un film de silice contenant du dioxyde de titane par projection de poudre à l'intérieur de la lampe.

Des méthodes par voie gazeuse sont également connues mais elles sont peu nombreuses et ne semblent pas être industrialisées. On peut citer la formation de dépôts de dioxyde de titane par hydrolyse de composés du titane tels le tétrachlorure de titane, selon le brevet US 3 352 703. Selon ce procédé on fait passer des vapeurs d'air humide et de tétrachlorure de titane à travers un arc électrique. L'air humide est produit par bullage dans l'eau. Au démarrage, l'arc électrique est alimenté par une tension alternative d'environ 5000 volts, après l'amorçage la tension d'alimentation est maintenue à environ 1100 volts. La demande de brevet français 2 304 169 est relative à un procédé de diffusion blanc d'une paroi en verre transparent par combustion d'un mélange d'hydrogène, d'air et d'une vapeur d'au moins un composé organique du silicium tel que le tétrachlorure de silicium. Selon cette technique, les particules provenant de la fumée de combustion du dit mélange sont dirigées et leur répartition contrôlée en épaisseur au moyen d'un champ électrique (haute tension comprise entre 5000 et 15 000 volts) régnant autour et dans l'ampoule. Et selon la demande allemande 2 906 038 on sait réaliser un apport d'oxydes de silicium et de bore à partir d'un mélange gazeux de $SiCl_4$ de $BCl_3$ et d'oxygène soumis à un traitement de pyrolyse ou d'hydrolyse. On peut aussi réaliser des dépôts d'alumine par combustion de composés organiques d'aluminium dissous dans un solvant en appliquant l'enseignement des brevets US 3 842 306 et 3 868 266. Le Général Electric a décrit la réalisation de dépôt de silice par combustion de tétraéthyle silicate dans le brevet US 3 109 747 selon un procédé en plusieurs stades relativement complexe.

Sachant que la silice serait le composé le plus performant pour l'opalisation de lampes et verres diffusants, et que d'une par son application par projection de poudre de silice pure ne conduit pas à une adhérence satisfaisante, et que d'autre part la silice en poudre fine employée pour cet usage est un produit cher spécialement préparé à partir d'un composé de silicium, on a recherché un procédé de fabrication de poudre fine de silice directement dans la lampe ou sur la surface diffusante et conduisant à un revêtement d'adhérence satisfaisante.

On a trouvé une méthode d'opalisation permettant une excellente transmission lumineuse par réalisation d'un dépôt de silice entièrement par voie gazeuse, d'une part plus économique, et d'autre part plus simple et plus rapide que les méthodes connues. L'appareillage de mise en œuvre de la nouvelle technique d'opalisation s'intègre aisément dans une chaine de fabrication de lampes, permettant ainsi de réaliser des économies de main d'œuvre.

Selon l'invention, le procédé d'opalisation par voie gazeuse, avec formation in-situ de poudre de silice, consiste à déposer sur la surface interne d'une lampe un film de silice obtenu par oxydation d'une composé de silicium, le dit composé étant chloré, par un gaz sec contenant de l'oxygène, à travers un arc électrique.

Le composé chloré est choisi parmi le groupe constitué par le monochlorosilane, le dichlorosilane, le trichlorosilane et le tétrachlorure de silicium. Ce dernier dérivé chloré du silicium, produit de la grande industrie présente un avantage économique certain et un intérêt technique indéniable.

L'équation de l'oxydation du tétrachlorure de silicium qui s'écrit:

$$SiCl_4 + O_2 \rightarrow SiO_2 + 2Cl_2\nearrow$$

montre l'absence de formation d'eau qui constitue un poison pour le filament des lampes, et dont même les traces diovent être éliminées avant fixation du filament. De plus, le tétrachlorure de silicium ne donne pas lieu à formation d'acide chlorhydrique humide agent éminement destructeur du filament, et à tout point de vue beaucoup plus corrosif que le chlore lui-même.

De ce fait, on comprend tout l'intérêt d'utiliser comme gaz d'oxydation un gaz sec contenant de l'oxygène, ce gaz oxydant pouvant être l'oxygène pur, de l'oxygène dilué dans un gaz inerte. L'emploi de l'azote comme diluant inerte ou l'air comme mélange oxydant n'est pas particulièrement recommandé en raison de la toxicité des oxydes d'azote formés et des vapeurs rousses, parfois assez abondantes, dont la présence risque de provoquer une coloration du dépôt de silice, bien que celles-ci peuvent disparaitre naturellement ou être désorbées par balayage gazeux.

Le rendement d'opalisation est donné par le rapport de la masse de silice effectivement déposée sur la masse théorique qui aurait dû être déposée.

L'arc électrique a pour fonction de permettre l'oxydation et, par conséquent de réaliser le dépôt de silice par oxydation du tétrachlorure de

silicium. On a remarqué que l'emploi d'un arc électrique est nécessaire à la formation d'un dépôt de silice satisfaisant. L'électrisation des particules de silice les rend adhérentes sur les surfaces de verre.

Tout type d'arc électrique sous tension élevée peut convenir à la mise en œuvre du procédé, l'arc alimenté en courant alternatif est très bien adapté. La formation du dépôt de silice sur la face interne de la lampe dépend de la tension appliquée entre les bornes des électrodes de l'arc. La tension doit être supérieure à quelques milliers de volts, la haute tension appliquée est comprise entre 5000 et 10 000 volts. En dessous de 5000 volts se produit une chute du rendement d'opalisation.

Le tétrachlorure de silicium de tension de vapeur élevée, 193 millimètres à 20° C, est entrainé par le gaz sec contenant de l'oxygène et introduit dans la lampe par une canalisation centrée, débouchant à une distance convenable, sous la pointe des électrodes disposées de part et d'autre de l'arrivée du gaz, le débit du gaz étant tel qu'il ne se forme pas de dépôt de silice au niveau des électrodes de l'arc.

La vitesse de formation du dépôt de silice est d'une part fonction de la tension appliquée aux électrodes de l'arc et d'autre part fonction du débit gazeux. On a constaté qu'une diminution du débit gazeux accroit la durée d'opalisation, alors qu'une trop grande augmentation du débit gazeux provoque une chute du rendement d'opalisation.

Pour l'opalisation d'une lampe type standard clair, le débit gazeux doit être avantageusement compris entre 10 et 30 l/h.

La concentration du tétrachlorure de silicium dans le mélange gazeux dépend de la température du tétrachlorure liquide. Pratiquement, on a besoin d'une faible quantité de tétrachlorure de silicium dans le gaz porteur pour opaliser et l'on obtient des résultats très satisfaisants à la température ambiante, si l'on veut abaisser la tension de vapeur du tétrachlorure de silicium dans la gaz porteur on peut envisager de refroidir le tétrachlorure de silicium ou d'augmenter le débit du gaz porteur.

Le procédé est mis en œuvre dans un appareillage simple comprenant une capacité (1) contenant de tétrachlorure de silicium (2), le gaz porteur contenant de l'oxygène est introduit dans le $SiCl_4$ par le tube plongeur (3), après barbottage dans le $SiCl_4$, le gaz porteur entrainant du $SiCl_4$ quitte la capacité par la canalisation (4) et est véhiculé à l'intérieur de la lampe dans la dite canalisation centrée qui débouche à une distance convenable sous la pointe des électrodes (5). On a trouvé que le positionnement de l'orifice d'arrivée du courant gazeux au deux tiers du col dans le cas d'une ampoule d'éclairage (6) en partant de la base, avec interaction de l'arc (7) au sommet du col, représente les conditions optimales pour obtenir une excellente opalisation quant à la qualité et au rendement.

Le procédé est applicable à l'opalisation des lampes à incandescence et à décharge de différents formats y compris les tubes, et aux globes des appareils d'éclairage.

L'opalisation des tubes pourrait être réalisée en appliquant uns translation du tube parallèlement à l'axe formé par les électrodes et l'axe du tube; la longueur des électrodes et du tube d'introduction du gaz étant au minimum égale à celle du tube à opaliser.

Il est donné ci-après des exemples qui illustrent l'invention à titre non limitatif.

### Exemple 1

Dans une lampe format standard clair, de hauteur totale 127 millimètres, dont le diamètre est de 60 millimètres dans la partie sphérique, de 36 millimètres au bas du col et de 33 millimètres au haut du col, à l'aide de l'appareil décrit précédemment le tétrachlorure de silicium est entrainé par un courant d'oxygène dont le débit est de 10 litres/heure, et introduit dans la lampe pendant 2 minutes par la canalisation centrée, de diamètre de buse 2 millimètres, débouchant à une distance de l'ordre de 20 millimètres sous la pointe des électrodes disposées de part et d'autre de l'arrivée gaz en respectant un écartement entre pointes de l'ordre de 10 millimètres. La tension appliquée aux électrodes de l'arc est de 8000 volts, l'intensité du courant alternatif étant de 25 mA. On obtient une opalisation satisfaisante correspondant à un dépôt de 70 mg de silice avec un rendement de 33%.

### Exemple 2

Dans les mêmes conditions d'appareillage, de positionnement des électrodes, de tension, d'intensité, de diamètre de buse d'arrivée de gaz, on réalise un essai avec un débit d'oxygène de 36 l/h, en faisant passer dans une lampe format standard clair pendant 1,30 minutes, on obtient un dépôt homogène de 70 mg de silice avec un rendement de 12%.

### Exemple 3

Dans des conditions identiques d'appareillage, de positionnement des électrodes, de tension, d'intensité, de diamètre de buse d'arrivée de gaz, on réalise un essai avec un débit d'oxygène de 25 l/h, au bout de 1,30 minutes d'introduction dans une lampe format standard clair, on obtient un dépôt homogène de 78 mg de silice avec un rendement de 20%.

### Exemple 4

Dans les mêmes conditions que précédemment, mais avec un débit d'oxygène de 5 l/h en faisant passer pendant 2 minutes dans une

lampe format standard clair, on réalise un dépôt homogène de 57 mg de silice avec un rendement de 54%.

## Revendications

1. Procédé d'opalisation des lampes par voie gazeuse avec réalisation, sur la surface interne d'une lampe, d'un film opaque de silice diffusant la lumière par oxydation par l'oxygène d'un composé du silicium, caractérisé en ce que le dit film de silice est formé par oxydation par un gaz sec contenant de l'oxygène, tel l'oxygène pur ou de l'oxygène dilué dans un gaz inerte à l'exception de l'azote, à travers un arc électrique alimenté par une tension alternative entre 5000 et 10 000 volts, d'un composé chloré du silicium choisi parmi le groupe constitué par le monochlorosilane, le dichlorosilane, le trichlorosilane et le tétrachlorure de silicium, le dit composé chloré du silicium entrainé par le gaz sec contenant de l'oxygène est introduit dans la lampe par une canalisation centrée, débouchant à une distance convenable, sous la pointe des électrodes disposées de part et d'autre de l'arrivée du gaz dont le débit est tel qu'il ne forme pas de dépôt de silice au niveau des électrodes de l'arc.

2. Procédé d'opalisation de lampes selon la revendication 1, le composé chloré étant le tétrachlorure de silicium, caractérisé en ce que le débit du gaz porteur contenant de l'oxygène et le tétrachlorure de silicium entrainé, introduit dans une lampe type standard clair est compris entre 10 et 30 litres/heure.

3. Application du procédé selon la revendication 1 à l'opalisation des lampes à incandescence et à décharge de différents formats, y compris les tubes, et aux globes des appareils d'éclairage.

## Patentansprüche

1. Verfahren zur Opalisierung von Lampen aus der Gasphase unter Ausbildung eines das Licht streuenden opaken Filmes von Siliciumdioxid auf der Innenfläche einer Lampe durch Oxidation einer Siliciumverbindung mit Hilfe von Sauerstoff, dadurch gekennzeichnet, daß der Siliciumdioxidfilm derart gebildet wird, daß man mit einem sauerstoffhaltigen trockenen Gas, wie reinem Sauerstoff oder mit einem Inertgas, ausgenommen Stickstoff, verdünntem Sauerstoff, in einem mit einer Wechselspannung zwischen 5000 und 10 000 V versorgten Lichtbogen eine chlorierte Siliciumverbindung, die aus der Gruppe Monochlorsilan, Dichlorsilan, Trichlorsilan und Siliciumtetrachlorid ausgewählt ist, oxidiert und die von dem trockenen sauerstoffhaltigen Gas mitgeführte chlorierte Siliciumverbindung in die Lampe durch einen mittigen Kanal einführt, der in einem geeigneten Abstand unter der Spitze der Elektroden mündet, die beiderseits des Eintrittes des Gases angeordnet sind, dessen Durchsatz derart ist, daß er keinen Siliciumdioxidniederschlag in der Höhe der Elektroden des Lichtbogens bildet.

2. Verfahren zur Opalisierung von Lampen nach Anspruch 1, bei dem die chlorierte Verbindung Siliciumtetrachlorid ist, dadurch gekennzeichnet, daß der Durchsatz des Sauerstoff und das mitgeführte Siliciumtetrachlorid enthaltenden Trägergases, das in eine klare Lampe vom Standardtyp eingeführt wird, zwischen 10 und 30 l/h liegt.

3. Anwendung des Verfahrens nach Anspruch 1 zur Opalisierung von Glühlampen und Glimmlampen unterschiedlicher Formate einschließlich Röhren und Kugeln von Beleuchtungskörpern.

## Claims

1. Method for the opalization of lamps in a gaseous way by realizing a deposition of an opaque film of silica defusing the light on the internal surface of a lamp by oxidation of a silicon compound by means of oxygen, characterized in that the said silica film is formed by oxidation of a chlorinated compound of silicon selected from the group consisting of monochlorosilane, dichlorosilane, trichlorosilane and silicontetrachloride, by means of a dry gas containing the oxygen, such as pure oxygen or oxygen diluted by an inert gas with the exception of nitrogen, across an electric arch fed with an alternating voltage of between 5000 and 10 000 V and the said chlorinated compound of silicon entrained by the dry gas containing the oxygen is introduced into the lamp through a central channel ending at a convenient distance below the point of the electrodes arranged at both sides of the entrance of the gas, the throughput of which is such that it does not from a deposition of silica at the level of the electrodes of the arch.

2. Method for the opalization of lamps according to claim 1, the chlorinated compound being silicontetrachloride, characterized in that the throughput of the carrier gas containing the oxygen and the entrained silicontetrachloride, introduced into the clear standard type lamp is comprised between 10 and 30 l/h.

3. Use of the method according to claim 1 for the opalization of incandescent lamps and discharge lamps of different shape including tubes and globes of lighting units.

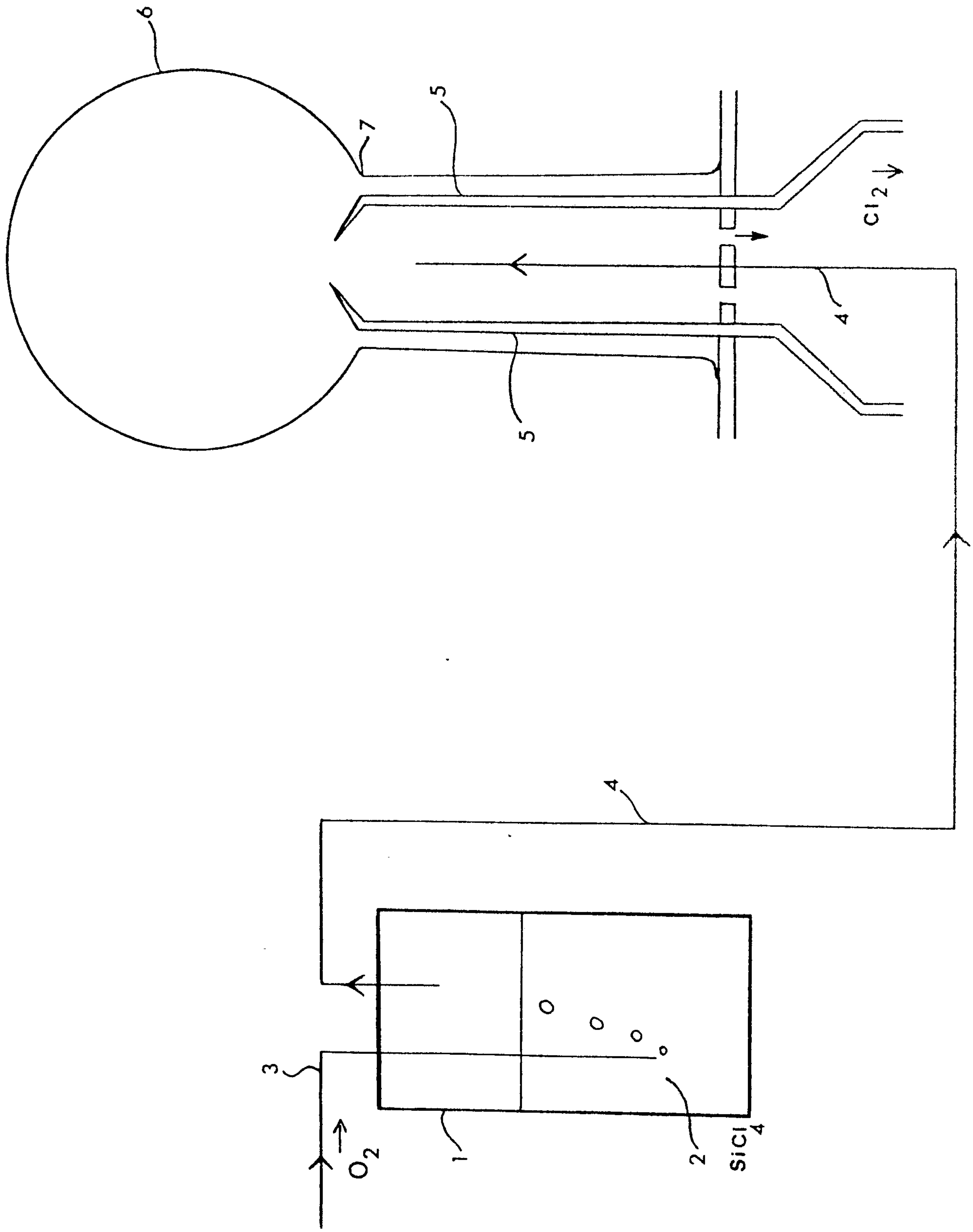
6
7
5
5
4
Cl2
4
3
O2
1
2
SiCl4